# EUROPEAN PATENT APPLICATION

(11) **EP 3 441 357 A1**
(43) Date of publication of application: **13.02.2019**
(21) Application number: 17185919.2
(22) Date of filing: 11.08.2017
(51) Int. Cl.: B68G 11/03, B60N 2/58, A47C 27/12, B68G 7/02

(54) **METHODS AND DEVICES FOR ATTACHING A COVER ON A FIBER CUSHION, AND FIBER CUSHION COMPRISING THE COVER**

(71) Applicant: Schukra Gerätebau GmbH, 2560 Berndorf (AT)
(72) Inventor: Könczöl, Georg, 1220 Wien (AT); Kristo, Darko, 2540 Bad-Vöslau (AT); Strümpf, Martin, 7221 Marz (AT)
(74) Representative: Banzer, Hans-Jörg

(57) **Abstract**

Methods (10) and devices (20) are provided for attaching a cover on a fiber cushion (30; 30a; 30b), the fiber cushion (30) being formed from loose fiber material. The method (10) comprises attaching (13) the cover on the fiber cushion (30; 30a; 30b) by at least one attachment means (33), while the device (20) comprises an attachment unit (23) configured to attach (13) the cover on the fiber cushion (30; 30a; 30b) by at least one attachment means (33). A fiber cushion (30a; 30b) comprising a cover is obtained by a method (10) for attaching a cover on a fiber cushion (30; 30a; 30b).

## Description

### FIELD OF THE INVENTION

The invention relates to methods and devices for attaching a cover on a fiber cushion, and to a processed fiber cushion produced by such methods. Various embodiments relate in particular to methods and devices for attaching a cover on a fiber cushion which is formed from loose fiber material.

### BACKGROUND OF THE INVENTION

Foams, such as polyurethane (PU) foams, are widely used as fabric backings for seats, such as for vehicle interior materials in the transportation industry. The foams are adhered to the backs of textile face materials. These foam backed composites have a cushion effect which can offer comfort or a luxurious feel in contact areas.

There are drawbacks to using polyurethane foam as cushioning material for seats. For example, the polyurethane foam backed material can emit volatile materials which contribute to 'fogging' of vehicle or housing interiors, and the foam itself may oxidize over time leading to a color change and material degradation / loss of properties in the material. Recyclability is also an issue which has to be addressed.

In this context, one class of materials which has received attention is nonwovens, for example synthetic fiber nonwovens (e.g. polyester, polyamide, polyolefin). These materials can provide a suitable backing to many face fabrics and provides cushion properties similar to the ones of foam materials at similar costs. For example, EP 2 417 876 discloses fiber cushions comprising heat-treated nonwovens, in particular a seat cushion body and a method of producing said seat cushion body. The fiber cushion is formed by filling loose fiber material into a mold and supplying heat to the fiber material within the mold.

Usually, fixing systems like wires and corresponding wire retention means, clips, hook-and-loop tapes etc. are used to couple a cover to a cushion, in particular in the specific case of seat cushions.

Given foam cushions, these fixing systems are typically placed directly within the mold of the cushion. In case of fiber cushions, this is, however, limited in terms of position and size of the fixing systems, because the specific method of producing said fiber cushion, which entails turbulances behind every undercut of the air stream passing through the mold, could result in areas having lower or different fiber densities, holes, or inhomogeneities.

At the same time, attachment methods for foam cushions are not generally applicable to fiber cushions either, as foam cushions and fiber cushions have quite different material properties which need to be taken account of in order to obtain processed fiber cushions of satisfactory quality and quantity.

### BRIEF SUMMARY OF THE INVENTION

In view of the above, there is a continued need in the art for methods and devices for attaching a cover on a fiber cushion which address some of the above needs. There is in particular a need in the art for methods and devices for attaching a cover on a fiber cushion which provide similar cover attachment capabilities as in the case of conventional foam cushions.

These underlying objects of the invention are each solved by a method and a device as defined by the independent claims. Preferred embodiments of the invention are set forth in the dependent claims.

According to a first aspect of the invention, a method for attaching a cover on a fiber cushion is provided, the fiber cushion being formed from loose fiber material. The method comprises attaching the cover on the fiber cushion by at least one attachment means.

Advantageously, the method enables attachment of a cover on a fiber cushion by employing an attachment means which is part of a fixing system. For example, a seat cover may be attached to a fiber cushion of a seat by means of an attachment means configured to retain support wires of the seat cover. In this example, the fixing system is formed by the attachment means and the support wires.

Advantageously, the method enables attachment of same or similar covers as in the case of conventional foam cushions.

The term "cover" generally refers to a protective or decorative coating laid or spread over an article to be protected or decorated. As used herein, the term particularly refers to a fabric or leather coating laid or spread over a fiber cushion.

As used herein, the term "attachment means" refers to any means capable of attaching articles to be joined by a reversible connection, such as wires in connection with other means engaging the wires, clips, hook-and-loop bands and so forth.

An alternative method for attaching a cover on a fiber cushion comprises attaching the cover on the fiber cushion by means of an adhesive.

Conventional foam cushions usually require a separating agent to release a produced cushion from its mold, which reduces a strength of any adhesive bond to the produced cushion. By contrast, there is no need for such a separating agent in the production of fiber cushions.

Advantageously, the alternative method thus strengthens an adhesive bond to the fiber cushion with respect to such an adhesive bond to a foam cushion.

Advantageously, the alternative method enables providing end products made of a single material, which simplifies recycling. For example, fiber cushions and covers both made of polyamide may be integrated with a co-polyamide adhesive, resulting in a single-material end product.

According to an embodiment, the at least one attachment means comprises a clamping portion for clamping the cover to the fiber cushion.

As used herein, the term "clamping portion" refers to a portion of an attachment means whose mechanical configuration may be altered from an open configuration to a closed configuration, particularly by plastic deformation, in order to obtain a form fit between the attachment means and an article to be clamped. In particular, the form fit may involve that the attachment means penetrates the article.

According to an embodiment, the at least one attachment means comprises a retaining portion for retaining the cover on the fiber cushion.

As used herein, the term "retaining portion" refers to a portion of an attachment means which, by virtue of its mechanical configuration, may engage around an article to be retained in order to obtain a form fit between the attachment means and the article.

According to an embodiment, the at least one attachment means comprises a hook ring.

As used herein, the term "hook ring" refers to a preferably annular attachment means having a preferably arcuate retaining portion which may be engaged around an article to be retained, and two extensions of the retaining portion separated by a void, serving as a clamping portion that may be clamped to another article, in order to obtain a form fit between the attachment means and the articles, and in turn a form fit between the articles.

According to an embodiment, the method further comprises arranging the cover on the fiber cushion, such that support means of the cover rest on at least one receiving means of the fiber cushion.

As used herein, the term "support means" refers to any means capable of reinforcing and/or stretching an article which would in itself be floppy, difficult to handle and/or difficult to hold in a predetermined position, such as a fabric or leather coating, for example. For such coatings, metal wires or beams may be used as support means, for example.

Advantageously, support means simplify handling of fabric or leather covers and hold them in a predetermined position. In addition, support means may, in connection with other means engaging the support means, simultaneously serve as attachment means.

As used herein, the term "receiving means" refers to any means capable of receiving an attachment means in a portion of the fiber cushion. In particular, this may be a cavity within the fiber cushion, or a fiber material of the fiber cushion itself. Said portion of the fiber cushion is correspondingly shaped to accomodate at least the clamping portion of the attachment means, and represents a predetermined target position for the attachment means on and in the fiber cushion. More particularly, the term may refer to recesses in a surface of the fiber cushion extending perpendicular or substantially perpendicular into the fiber cushion, such that attachment means, for example hook rings, may be put into the receiving means with little effort.

According to an embodiment, the method further comprises arranging the at least one attachment means at a corresponding one of the at least one receiving means of the fiber cushion.

According to an embodiment, arranging the at least one attachment means at the corresponding one of the at least one receiving means of the fiber cushion comprises inserting the at least one attachment means into the corresponding one of the at least one receiving means of the fiber cushion.

As used herein, the term "inserting" refers to putting or placing the concerned attachment means into the corresponding receiving means. For example, inserting a hook ring used as an attachment means into a corresponding receiving means refers to putting the respective extensions of the retaining portion, i.e. the clamping means, of the hook ring into respective cavities of the receiving means, such that the ends of the extensions embrace a portion of the fiber cushion located in between the cavities of the receiving means.

Advantageously, inserting attachment means into receiving means is simplified by correspondingly shaped receiving means, and facilitates holding inserted attachment means in their predetermined position.

According to an embodiment, arranging the at least one attachment means at the corresponding one of the at least one receiving means of the fiber cushion further comprises engaging the at least one attachment means around the support means of the cover.

As used herein, the term "engaging around" refers to causing the concerned attachment means and support means to come together, wherein the attachment means engages the support means using its retaining portion.

Advantageously, engaging attachment means around support means establishes a simple, inexpensive and reversible form fit between the concerned attachment and support means via the retaining portion of the particular attachment means.

According to an embodiment, attaching the cover on the fiber cushion by at least one attachment means comprises closing the at least one attachment means through the fiber cushion within the corresponding one of the at least one receiving means.

As used herein, the term "closing" refers to bringing together the ends of the respective clamping portion of the concerned attachment means so as to close the void between the extensions, to enclose a section of an article within the attachment means, and to block the clamping portion against passage of the enclosed article.

Advantageously, closing attachment means through the fiber cushion establishes a simple, inexpensive and reversible form fit between the concerned attachment means and the fiber cushion via the closed clamping portion of the particular attachment means.

Advantageously, a form fit between support and attachment means on the one hand and a form fit between attachment means and the fiber cushion on the other hand as well establishes a form fit between the support means and the fiber cushion. In other words, if the concerned attachment means engages around the support means and is closed through the fiber cushion, the cover supported by the supporting means is also attached on the fiber cushion.

Advantageously, the cover and the fiber cushion attached to each other by form fit may be separated from each other with little effort, facilitating recycling and refurbishing of the particular end product that comprises the fiber cushion.

The steps of arranging attachment means at, and inserting attachment means into corresponding receiving means, engaging attachment means around support means as well as closing attachment means through the fiber cushion may be required several times when attaching a cover on a fiber cushion. Advantageously, these steps may be performed in partial or full combination to simplify and automate attaching a cover on a fiber cushion.

According to an embodiment, the support means of the cover comprises at least one wire or beam being attached along the cover.

As used herein, the terms "wire" and "beam" refer to rods of metal or other material which are capable of withstanding plastic deformation when being subjected up to a predetermined force.

Advantageously, wires and beams may impart a strong predefined support in a lateral direction of the wire or beam at a minimum of weight and/or space requirement.

According to an embodiment, the at least one receiving means of the fiber cushion comprises at least one pair of adjacent recesses configured to receive the at least one attachment means.

According to an embodiment, the at least one receiving means of the fiber cushion comprises at least one pair of adjacent blind holes configured to receive the at least one attachment means.

For example, pairs of adjacent blind holes or pairs of adjacent grooves may be used as receiving means in connection with hook rings used as attachment means. In particular, pairs of blind holes extending perpendicular into the fiber cushion may be easier to form, while pairs of blind holes extending substantially perpendicular into the fiber cushion may enclose more fiber material in between them, which improves a force deflection capability by the cushion.

As used herein, the term "substantially perpendicular" refers to a spatial arrangement of the respective blind hole wherein a longitudinal axis of the blind hole and a direction perpendicular to the surface of the fiber cushion enclose an intermediate angle of preferably less than 45°, more preferably less than 30°, and most preferably less than 5°.

According to a second aspect of the invention, a fiber cushion comprising a cover is provided. The fiber cushion is obtained by a method for attaching a cover on a fiber cushion according to various embodiments.

According to a third aspect of the invention, a device for attaching a cover on a fiber cushion is provided, the fiber cushion being formed from loose fiber material. The device comprises an attachment unit configured to attach the cover on the fiber cushion by at least one attachment means.

According to an embodiment, the device is configured to perform a method for attaching a cover on a fiber cushion according to various embodiments.

Advantageously, the technical effects and advantages described above in relation with the method for shaping a fiber cushion equally apply to the device for shaping a fiber cushion having corresponding features.

### BRIEF DESCRIPTION OF THE DRAWINGS

Embodiments of the invention will be described with reference to the accompanying drawings, in which the same or similar reference numerals designate the same or similar elements.
Figs. 1 - 2 are flow diagrams illustrating methods for attaching a cover on a fiber cushion according to various embodiments.
Fig. 3 is a schematic block diagram illustrating a device for attaching a cover on a fiber cushion according to an embodiment.
Figs. 4 - 7 are schematic cross-sectional diagrams of fiber cushions subjected to the methods for attaching a cover on a fiber cushion according to various embodiments.

### DETAILED DESCRIPTION OF EMBODIMENTS

Exemplary embodiments of the invention will now be described with reference to the drawings.

While some embodiments will be described in the context of specific fields of application, the embodiments are not limited to this field of application. Further, the features of the various embodiments may be combined with each other unless specifically stated otherwise.

The elements illustrated in the schematic drawings are not necessarily shown to scale. Rather, the various elements are represented such that their function and general purpose become apparent to a person skilled in the art.

In all figures and the following description, it is distinguished between fiber cushions 30 without a cover, and fiber cushions 30a; 30b comprising a cover and being produced by a method 10 for attaching a cover on a fiber cushion 30; 30a; 30b. It should be noted that the method 10 may be applied just as much to fiber cushions 30 and fiber cushions 30a; 30b, and that covers may require being attached multiple times on a fiber cushion 30; 30a; 30b.

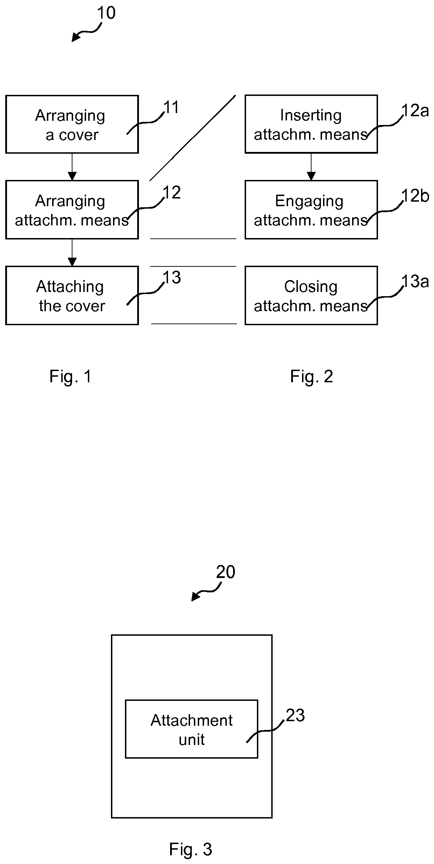

Figs. 1 - 2 are flow diagrams illustrating methods 10 for attaching a cover on a fiber cushion 30; 30a; 30b according to various embodiments.

From Fig. 2, pairs of lines extends towards the previous Fig. 1 indicating that the method steps framed by the pair of lines in Fig. 1 may comprise those method steps framed by the pair of lines in Fig. 2.

Making reference to Fig. 1, a method 10 for attaching a cover on a fiber cushion 30; 30a; 30b is shown. The fiber cushion 30 is formed from loose fiber material.

As a fundamental step, the method 10 comprises attaching 13 the cover on the fiber cushion 30; 30a; 30b by at least one attachment means 33.

Preceding the attaching 13 step, the method 10 further comprises arranging 12 the at least one attachment means 33 at a corresponding of at least one receiving means 34 of the fiber cushion 30; 30a; 30b.

Preceding the arranging 12 step, the method 10 further comprises arranging 11 the cover on the fiber cushion 30; 30a; 30b, such that support means 32 of the cover rest on at the at least one receiving means 34 of the fiber cushion 30; 30a; 30b.

With reference to Fig. 2, it will be appreciated that arranging 12 the at least one attachment means 33 at the corresponding one of the at least one receiving means 34 of the fiber cushion 30; 30a; 30b comprises inserting 12a the at least one attachment means 33 into the corresponding one of the at least one receiving means 34 of the fiber cushion 30; 30a; 30b.

With continuing reference to Fig. 2, it will also be appreciated that arranging 12 the at least one attachment means 33 at the corresponding one of the at least one receiving means 34 of the fiber cushion 30; 30a; 30b further comprises engaging 12b the at least one attachment means 33 around the support means 32 of the cover.

As also shown in Fig. 2, attaching 13 the cover on the fiber cushion 30; 30a; 30b by at least one attachment means 33 comprises closing 13a the at least one attachment means 33 through the fiber cushion 30; 30a; 30b within the corresponding one of the at least one receiving means 34.

Fig. 3 is a schematic block diagram illustrating a device 20 for attaching a cover on a fiber cushion 30; 30a; 30b according to an embodiment. The fiber cushion 30 is formed from a loose fiber material.

The device 20 comprises an attachment unit 23 configured to attach 13 the cover on the fiber cushion 30; 30a; 30b by at least one attachment means 33. The device 20 is further configured to perform a method 10 for attaching a cover on a fiber cushion 30; 30a; 30b according to various embodiments.

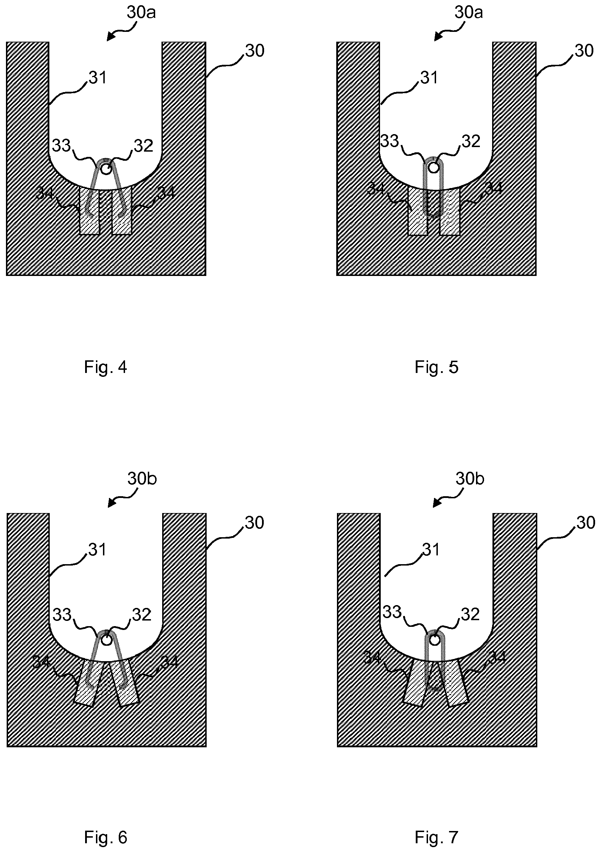

Figs. 4 - 7 are schematic cross-sectional diagrams of fiber cushions 30; 30a; 30b subjected to the method 10 for attaching a cover on a fiber cushion 30; 30a; 30b according to various embodiments.

As can be seen, it is common to Figs. 4 - 7 that from the respective fiber cushion 30, which is formed from loose fiber material, a trim channel 31 and at least one receiving means 34 have already been removed before applying the method 10 for attaching a cover on a fiber cushion 30. Fiber cushions 30a and fiber cushions 30b are distinguished by the spatial arrangement of their respective receiving means 34 within the concerned fiber cushion 30; 30a; 30b.

With continuing reference to Figs. 4 - 7, respective covers (not illustrated) have been arranged 11 on the fiber cushion 30; 30a; 30b. The respective cover comprises a support means 32, which is shown as being placed in a corresponding trim channel 31, where it rests on the at least one receiving means 34 of the fiber cushion 30; 30a; 30b. In general, more than one receiving means 34 may be involved in attaching a cover on a fiber cushion 30; 30a; 30b.

As can also be taken from these Figs., the at least one receiving means 34 of the fiber cushion 30; 30a; 30b comprises at least one pair of adjacent recesses 34, in particular adjacent blind holes 34.

Fiber cushions 30a shown in Figs. 4 - 5 comprise a pair of adjacent blind holes 34 as the receiving means 34 which extend along an up-down direction in the concerned Figs., whereas fiber cushions 30b shown in Figs. 6 - 7 extend substantially along the up-down direction. In other words, the pairs of adjacent blind holes 34 shown in Figs. 4 - 7 extend along a substantially perpendicular direction with respect to the surface of the respective fiber cushion 30; 30a; 30b. The illustrated pairs of adjacent blind holes 34 are configured to receive a corresponding attachment means 33. In general, more than one attachment means 33 may be involved in attaching a cover on a fiber cushion 30; 30a; 30b.

Still referring to Figs. 4 - 7, the at least one attachment means 33 has been arranged 12 at a corresponding one of the at least one receiving means 34 of the fiber cushion 30; 30a; 30b. In other words, the respective attachment means 33 rests on the corresponding receiving means 34, in relation to the up-down direction previously mentioned. In particular, arranging 12 the respective attachment means 33 at the respective corresponding receiving means 34 of the fiber cushion 30; 30a; 30b may entail penetrating the cover by means of the attachment means 33.

Figs. 4 - 7 furthermore depict hook rings 33 being used as attachment means 33, each having an arcuate clamping portion for clamping the cover to the fiber cushion 30; 30a; 30b and a retaining portion for retaining the cover on the fiber cushion 30; 30a; 30b having two elongate extensions whose ends point towards each other.

The arcuate clamping portion of the respective hook ring 33 is shown to engage around the respective support means 32 of the cover, which is realized as wires being attached along the cover.

Figs. 4, 6 show that the hook rings 33 have been inserted 12a into the corresponding pair of adjacent blind holes 34 of the fiber cushion 30; 30a; 30b.

From Figs. 5, 7, it can be taken that the respective cover has been attached 13 on the respective fiber cushion 30; 30a; 30b by closing 13a the respective hook ring 33 through the respective fiber cushion 30; 30a; 30b within the respective corresponding pair of adjacent blind holes 34.

While methods, devices and fiber cushions according to various embodiments have been described, various modifications may be implemented in other embodiments.

For illustration, it is conceivable that arranging the cover on the fiber cushion not necessarily involves a preceding removal of trim channels from the respective fiber cushion.

For further illustration, it is also conceivable that arranging respective attachment means involves creating the respective corresponding receiving means by means of strong mechanical impetus and/or high temperature of the respective attachment means.

For further illustration, it is also conceivable that the method steps 12a and 12b are performed in reverse order or simultaneously.

## Claims

1. A method (10) for attaching a cover on a fiber cushion (30; 30a; 30b), the fiber cushion (30) being formed from loose fiber material, the method (10) comprising
- attaching (13) the cover on the fiber cushion (30; 30a; 30b) by at least one attachment means (33).

2. The method (10) of claim 1,
wherein the at least one attachment means (33) comprises a clamping portion for clamping the cover to the fiber cushion.

3. The method (10) of claim 1 or claim 2,
wherein the at least one attachment means (33) comprises a retaining portion for retaining the cover on the fiber cushion.

4. The method (10) of any one of claims 1 - 3,
wherein the at least one attachment means (33) comprises a hook ring.

5. The method (10) of any one of claims 1 - 4, further comprising
- arranging (11) the cover on the fiber cushion (30; 30a; 30b), such that support means (32) of the cover rest on at least one receiving means (34) of the fiber cushion (30; 30a; 30b).

6. The method (10) of claim 5, further comprising
- arranging (12) the at least one attachment means (33) at a corresponding one of the at least one receiving means (34) of the fiber cushion (30; 30a; 30b).

7. The method (10) of claim 6,
wherein arranging (12) the at least one attachment means (33) at the corresponding one of the at least one receiving means (34) of the fiber cushion (30; 30a; 30b) comprises
- inserting (12a) the at least one attachment means (33) into the corresponding one of the at least one receiving means (34) of the fiber cushion (30; 30a; 30b).

8. The method (10) of claim 7,
wherein arranging (12) the at least one attachment means (33) at the corresponding one of the at least one receiving means (34) of the fiber cushion (30; 30a; 30b) further comprises
- engaging (12b) the at least one attachment means (33) around the support means (32) of the cover.

9. The method (10) of any one of claims 6 - 8,
wherein attaching (13) the cover on the fiber cushion (30; 30a; 30b) by at least one attachment means (33) comprises
- closing (13a) the at least one attachment means (33) through the fiber cushion (30; 30a; 30b) within the corresponding one of the at least one receiving means (34).

10. The method (10) of any one of claims 5 - 9,
wherein the support means (32) of the cover comprises at least one wire or beam being attached along the cover.

11. The method (10) of any one of claims 5 - 10,
wherein the at least one receiving means (34) of the fiber cushion (30; 30a; 30b) comprise at least one pair of adjacent recesses configured to receive the at least one attachment means (33).

12. The method (10) of claim 11,
wherein the at least one receiving means (34) of the fiber cushion (30; 30a; 30b) comprise at least one pair of adjacent blind holes configured to receive the at least one attachment means (33).

13. A fiber cushion (30a; 30b) comprising a cover, wherein the fiber cushion (30a; 30b) is obtained by a method (10) for attaching a cover on a fiber cushion (30; 30a; 30b) of any one of claims 1 - 12.

14. A device (20) for attaching a cover on a fiber cushion (30; 30a; 30b), the fiber cushion (30) being formed from a loose fiber material, the device (20) comprising
- an attachment unit (23) configured to attach (13) the cover on the fiber cushion (30; 30a; 30b) by at least one attachment means (33).

15. The device (20) of claim 14, wherein the device (20) is configured to perform a method (10) for attaching a cover on a fiber cushion (30; 30a; 30b) of any one of claims 1 - 12.
